# EUROPÄISCHE PATENTSCHRIFT

(11) **EP 2 367 654 B1**
(45) Veröffentlichungstag und Bekanntmachung des Hinweises auf die Patenterteilung: **27.06.2012**
(21) Anmeldenummer: 09783371.9
(22) Anmeldetag: 24.09.2009
(51) Int. Cl.: B23B 51/02, E21B 10/44

(54) **Bohrwerkzeug für Bohr- und/oder Meisselgeräte**
Drill bit for drilling and/or cutting device
Foret pour appareil de forage et/ou de burinage

(30) Priorität: 24.11.2008 DE 102008043998
(43) Veröffentlichungstag der Anmeldung: 28.09.2011
(60) Teilanmeldung: 12161934.0
(73) Patentinhaber: Robert Bosch GmbH, 70442 Stuttgart (DE)
(72) Erfinder: DUSCHA, Helmut, 88212 Ravensburg (DE); KELLER-SORNIG, Peter, CH-5105 Auenstein (CH); WIDMANN, Rainer, 88213 Ravensburg (DE); ANGHILERI, Massimo, CH-4500 Solothurn (CH); FUESSL, Hans-Peter, 88212 Ravensburg (DE); STEFANOPULOS, Michalis, CH-4500 Solothurn (CH); SCHWALLER, Peter, CH-4710 Balstha (CH); ECKERT, Wilhelm, 73312 Geislingen (DE)
(86) Internationale Anmeldenummer: PCT/EP2009/062383
(87) Internationale Veröffentlichungsnummer: WO 2010/057706

(56) Entgegenhaltungen:
- EP-A1- 1 216 775
- EP-A2- 1 923 160
- WO-A1-00/07761
- WO-A1-2008/014367
- US-A1- 2008 003 072

## Beschreibung

### Stand der Technik

Bohrwerkzeuge gemäß dem Oberbegriff des Anspruchs 1 sind aus den Dokumenten EP 1 923 160 A und EP 1 216 775 A bekannt.

Aus der EP 0 846 835 B1 ist ein Beton- oder Gesteinbohrwerkzeug mit wendelförmigen Abfuhrnuten bekannt, bei welchem die Schneidplatte an den beiden radialen Endbereichen sich entgegen dem wendelförmigen Auslauf der Abfuhrnuten erstreckende Verstärkungen aufweist. Derartige Gesteinsbohrwerkzeuge weisen zwar durch einen erhöhten Materialeinsatz eine höhere Belastbarkeit auf, eine umfassende Optimierung insbesondere auch in Hinblick auf Zerstörungsleistung, Reibung und Materialverbrauch wird mit derartigen Gesteinsbohrwerkzeugen aber nicht erreicht.

### Offenbarung der Erfindung

Aufgabe der Erfindung ist es, ein Bohrwerkzeug vorzuschlagen, bei welchem der Schneidkörper im Vergleich zu einem konventionellen Schneidkörper mit etwa gleichem Hartmetallvolumen ebenfalls eine erhöhte Belastbarkeit aufweist, durch welche die maximal mögliche Belastung bzw. die Standzeit signifikant erhöht wird.

Erfindungsgemäß wird diese Aufgabe durch ein Bohrwerkzeug gelöst, welches die im kennzeichnenden Teil des Anspruchs 1 angeführten Merkmale aufweist.

Erfindungsgemäß ist es vorgesehen, den Schneidkanten zwischen der Schneidspitze und Mantelflächen, welche die Seitenflächen verbinden, jeweils wenigstens einen Abschnitt mit einem bogenförmigen, eine - in Längserstreckung des Bohrwerkzeugs betrachtet - radiale Bewegung des Bohrkleins bremsenden bzw. hemmenden Verlauf zu geben. Hierdurch wird eine verbesserte Mitnahme des Bohrkleins um die Drehachse erreicht. Dies führt zu einer verbesserten Abführung des Bohrkleins über den Bohrkopf in die Abfuhrnut bzw. die Abfuhrnuten und so zu einer Verringerung von Anhäufungen von Bohrklein zwischen Bohrlochwand und Bohrwerkzeug. Diese verbesserte Zuführung des Bohrkleins in die Abfuhrnut bzw. die Abfuhrnuten führt insgesamt zu einer Verringerung der Reibungsverluste insbesondere zwischen Schneidkörper und Bohrlochwand, da weniger Bohrklein zwischen der Bohrlochwand und dem Bohrwerkzeug zermalen werden muss. Somit erhöht sich die Standzeit des Bohrwerkzeugs, da ein Verschleißvorgang minimiert wird, durch welchen der Durchmesser des Schneidkörpers verringert wird.

Erfindungsgemäß beginnt der bogenförmige Abschnitt der dort Schneidkante, wo sich der Spitzenwinkel der Schneispitze des Schneidkörpers sprunghaft verändert und insbesondere sprunghaft verkleinert. Bei diesen Schneidkanten ist eine Wirkung der erfindungsgemäßen Gestaltung in einem kreisringförmigen Bereich um die Längsachse des Bohrwerkzeugs sicher gestellt. Hierdurch weist das Bohrwerkzeug eine vergleichsweise große Wirkung auf.

Insbesondere sieht die Erfindung vor, diesen bogenförmigen Abschnitt der Schneidkante, als konkav geformte Schneidkante auszubilden, welche sich wie eine Sichel in Drehrichtung des Bohrwerkzeugs bewegt, wobei die Betrachtung in Richtung der Längserstreckung des Bohrwerkzeugs erfolgt. Mit einem derartigen sichelförmigen Verlauf der Schneidkanten bzw. der in Drehrichtung vor den Schneidkanten liegenden Spanflächen ist es möglich, Bohrklein im kreisringförmigen Schlagfeld, welches das durch die Spitze bearbeitete innere Schlagfeld umgibt, zu zurückhalten bis dieses durch die Abfuhrnut bzw. die Abfuhrnuten abtransportiert wird. Durch diese Formgebung der Schneidkanten wird ein radial nach außen gerichtetes Wegströmen des durch das Bohrwerkzeug abgetragenen Materials gebremst.

Die Erfindung sieht weiterhin eine Schneidkante mit einem bogenförmigen Abschnitt vor, welcher sich über wenigstens 50% eines Nennradius des Schneidkörpers erstreckt und insbesondere in oder an einer Spitze des Schneidkörpers beginnt.

Die Erfindung sieht vor, den bogenförmigen Abschnitt der Schneidkante, dort enden zu lassen, wo die Schneidkante in die Mantelfläche des Schneidkörpers übergeht. Hierdurch ist es möglich die auch im äußersten Randbereich noch die positiven Eigenschaften einer gebogenen Schneidkante auszunutzen und ein Bohrwerkzeug mit besonders geringen Reibverlusten zu erlangen.

Alternativ sieht die Erfindung vor, den bogenförmigen Abschnitt der Schneidkante bis zu einem durch den Schaft oder den Bohrerkopf definierten Umkreis zu führen. Hierdurch wird ein Bohrwerkzeug erreicht, dessen Schneidkörper in radial außen liegenden Eckbereichen der Spanflächen besonders Robust ist.

Die Erfindung sieht vor, den bogenförmigen Abschnitt mit einem Radius oder mehreren aneinandergereihten Radien zu gestalten, wobei alle Radien größer sind als ein Nennradius des Schneidkörpers. Durch eine derartige Dimensionierung des bogenförmigen Abschnitts wird ein zu starkes Zurückhalten von Bohrklein vermieden.

Erfindungsgemäß weist das Bohrwerkzeug einen ersten Schneidkörper auf, bei welchem jede Schneide des Schneidkörpers, in Richtung der Längserstreckung des Bohrwerkzeugs betrachtet, quer zu der Breite des Schneidkörpers eine Dicke aufweist, welche mit zunehmendem radialen Abstand von der Schneidspitze von einer minimalen Dicke auf eine maximale Dicke zunimmt, wobei eine Materialzunahme in Drehrichtung des Bohrwerkzeugs vor der Schneidkante oder beidseits der Schneidkante erfolgt. Hierdurch weist der Schneidkörper an jeder Schneide mit zunehmendem radialem Abstand von seiner Längsachse ein zunehmendes Volumen auf, welches bei der Drehbewegung eine bessere Aufnahme der radial nach außen zunehmenden Scheidkräfte ermöglicht. Schließlich erlaubt es diese spezielle Formgebung des Scheidkörpers, mit dem Bohrwerkzeug beim Schlagen in einem um die Schneidspitze angeordneten kreisringförmigen Schlagfeld mehr Material zu zerstören als mit einem herkömmlich geformten Schneidkörper mit vergleichbarem Volumen. Eine auf Grund der Formgebung des Scheidkörpers in einem kreisförmigen inneren Schlagfeld ggf. reduzierte Zerstörungsleistung wird in diesem Bereich durch einen verstärkten Materialabtrag durch Rotation wirtschaftlich ausgeglichen, da für einen Rotationsabtrag im inneren Schlagfeld ein vergleichsweise kleines Drehmoment ausreichend ist. Erfindungsgemäß entsteht somit ein Bohrwerkzeug mit einer Schneidkörpergeometrie, welche auf die sich konzentrisch um die Längsachse verändernden Belastungen und Anforderungen optimiert ist und durch diese individuelle Anpassung einzelner Bereiche eine höhere maximale Belastung des Bohrwerkzeugs erlaubt. Hierzu ist der Scheidkörper im Vergleich zu einem herkömmlichen Scheidkörper in Bereichen, in welchen die Belastung über einer Durchschnittsbelastung liegt, massiver ausgebildet und hierzu ist der Schneidkörper in Bereichen, in welchen die Belastung unter einer Durchschnittsbelastung liegt, filigraner ausgebildet.

Weiterhin sieht die Erfindung vor, Seitenflächen der Scheiden, mit welchen die jeweilige Schneide in den Bohrerkopf eingebettet ist, in einem spitzen Winkel zueinander anzuordnen, wobei sich Ebenen, in welchen die Seitenflächen liegen, in einer Schnittlinie schneiden, welche den Schneidkörper im Bereich der gegenüberliegenden Schneide durchläuft. Durch eine derartige Gestaltung lassen sich die unterschiedlichen Anforderungen, welche sich mit zunehmendem radialem Abstand von der Längsachse ergeben, in der Regel vergleichsweise gut erfüllen.

Die Erfindung sieht auch vor, Seitenflächen der beiden Schneiden des ersten Schneidkörpers, welche in Spanflächen übergehen, in parallelen Ebenen anzuordnen bzw. Seitenflächen der beiden Schneiden, welche in Freiflächen übergehen, in parallelen Ebenen anzuordnen. Hierdurch ist insbesondere ein im Bohrkopf vorgesehener Schlitz zur Aufnahme des Schneidkörpers durch einen einfachen Bearbeitungsvorgang, beispielsweise mit einer Schleifscheibe, herstellbar.

Die Erfindung sieht vor, den Schneidkörper als Schneidplatte auszubilden, welche in einem in dem Bohrkopf ausgebildeten Schlitz befestigbar ist. Ein derartiges Bohrwerkzeug lässt sich infolge der Optimierung des Schneidkörpers mit einer vergleichsweise geringen Menge an Hartmetall herstellen.

Alternativ sieht die Erfindung vor, den Schneidkörper als Vollhartmetallkopf auszubilden, welcher auf den Bohrkopf insbesondere plan aufsetzbar oder mit diesem formschlüssig verbindbar ist. Im Vergleich mit herkömmlichen Vollhartmetallköpfen ist auch hier nur eine vergleichsweise geringe Menge an Hartmetall erforderlich um optimale Arbeitsergebnisse bzw. eine gute Standzeit zu erzielen.

Weiterhin sieht die Erfindung vor, das Bohrwerkzeug mit einem zweiten und insbesondere einem dritten Schneidkörper zu bestücken, wobei diese insbesondere gegenüberliegend angeordnet sind und als Nebenschneidkörper ausgebildet sind, welche mit Abstand zu dem ersten Scheidkörper an dem Bohrerkopf angeordnet sind und wobei die Nebenschneidkörper jeweils nur eine Schneide aufweisen. Durch derartige Nebenschneidkörper ist es möglich, insbesondere bei Bohrwerkzeugen mit einem Nenndurchmesser des ersten Schneidkörpers von mehr als 15 mm die Bohrleistung zu steigern.

Schließlich sieht die Erfindung vor, die Schneide des Nebenschneidkörpers, in Richtung der Längsachse des Bohrwerkzeugs betrachtet, als Schneide mit in radialer Richtung divergierenden Seitenflächen auszubilden, wobei an der Schneid insbesondere eine Materialzunahme in Drehrichtung vor einer Schneidkante oder beidseits der Schneidkante erfolgt. Hierdurch können an den Nebenschneiden Vorteile erzielt werden, welche vergleichbar mit den an der ersten Schneidplatte erzielten Vorteilen sind.

In einer bevorzugten Ausführung weist das erfindungsgemäße Bohrwerkzeug einen Schaft mit wenigstens einer wendelförmigen Abfuhrnut, wodurch ein Abtransport des Bohrkleins vorteilhaft begünstigt wird.

In einer weiteren bevorzugten Ausführung umfasst das erfindungsgemäße Bohrwerkzeug ein Einsteckende, durch welches es als vorteilhaftes Wechselwerkzeug ausgebildet werden kann.

Weitere Einzelheiten der Erfindung werden in der Zeichnung anhand von schematisch dargestellten Ausführungsbeispielen beschrieben.

Hierbei zeigt:
- Figur 1a, 1b:: schematische Darstellungen von zwei Bohrwerkzeugen;
- Figur 2 bis 4:: eine Draufsicht auf eine nicht erfindungsgemäße erste, zweite und dritte Ausführungsvariante eines Bohrwerkzeugs;
- Figur 5a bis 5c:: drei Teilansichten einer erfindungsgemäßen vierten Ausführungsvariante eines Bohrwerkzeugs;
- Figur 6a bis 6c:: drei Teilansichten einer erfindungsgemäßen fünften Ausführungsvariante eines Bohrwerkzeugs;
- Figur 7:: eine Draufsicht auf eine nicht erfindungsgemäße sechste Ausführungsvariante eines Bohrwerkzeugs;
- Figur 8a:: eine schematische Darstellung eines nicht erfindungsgemäßen Schneidkörpers und
- Figur 8b:: eine schematische Darstellung eines Schneidkörpers entsprechend dem Stand der Technik.

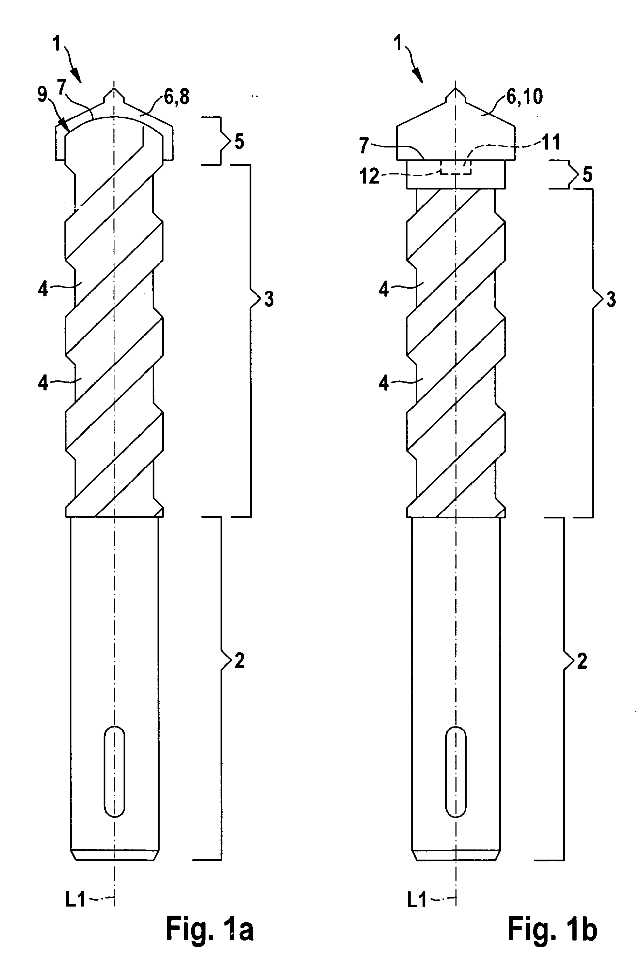

In der Fig. 1a ist ein schematisch dargestelltes Bohrwerkzeug 1 in Seitenansicht gezeigt. Das Bohrwerkzeug 1 umfasst ein Einsteckende 2, welches als sog. SDS-Einsteckende ausgebildet ist, einen Schaft 3, mit Abfuhrnuten 4, einen Bohrkopf 5 und einen Schneidkörper 6. Der Schneidkörper 6 ist an einem freien Ende 7 des Bohrkopfes 5 angeordnet und als Schneidplatte 8 ausgeführt, welche in einem Schlitz 9 des Bohrkopfes 5 befestigt ist.

Fig. 1 b zeigt ebenfalls ein schematisch dargestelltes Bohrwerkzeug 1 in Seitenansicht. Auch bei diesem Bohrwerkzeug 1 folgt auf ein Einsteckende 2 ein Schaft 3, welcher wendelförmige Abfuhrnuten 4 aufweist und in einem Bohrkopf 5 endet, welcher einen Scheidkörper 6 trägt. Im Unterschied zu dem in der Fig. 1a dargestellten Bohrwerkzeug ist der Schneidkörper 6 als Vollhartmetallkopf 10 ausgeführt, welcher überwiegend plan auf einem freien Ende 7 des Bohrkopfes 5 aufliegt und zusätzlich mit einem Stift 11 in eine Vertiefung 12 eingebettet ist.

Die in den Figuren 1a und 1 b dargestellten Bohrwerkzeuge 1 weisen jeweils eine Längsachse L1 auf.

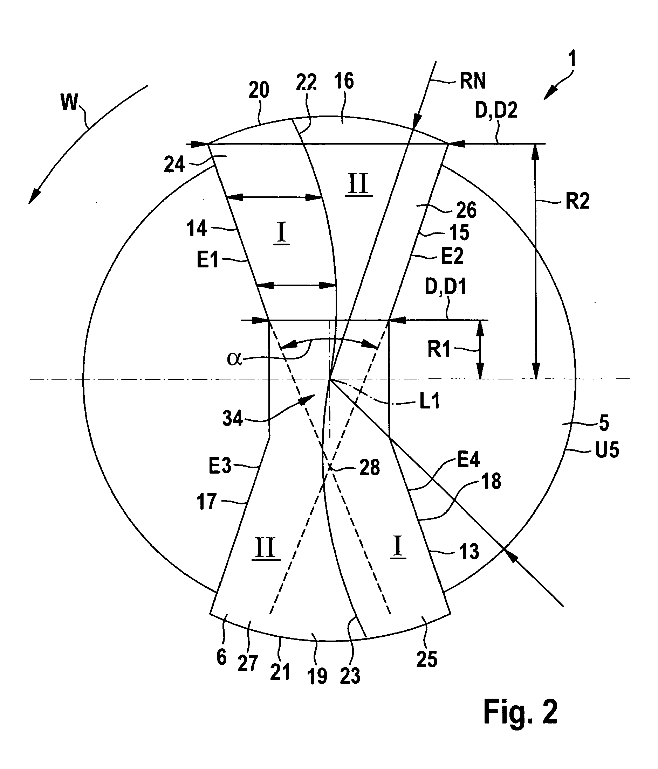

In der Fig. 2 ist eine nicht erfindungsgemäße erste Ausführungsvariante eines Bohrwerkzeugs 1 gezeigt, dessen prinzipieller Aufbau dem in der Fig. 1a gezeigten Bohrwerkzeug entspricht. In der Draufsicht, welche in Richtung der Längsachse L1 des Bohrwerkzeugs 1 orientiert ist, ist ein Schneidkörper 6 mit einer sanduhrähnlichen Kontur 13 erkennbar, welche im Wesentlichen durch Seitenflächen 14, 15 einer ersten Schneide 16, Seitenflächen 17, 18 einer zweiten Schneide 19 und Mantelflächen 20, 21 gebildet ist. Die Schneiden 16, 19, welche zusammen den Schneidkörper 6 bilden, weisen quer zu ihrer radialen Erstreckung über einen Bohrerkopf 5 Dicken D auf, welche mit zunehmendem radialen Abstand R1, R2 von einer minimalen Dicke D1 auf eine maximale Dicke D2 zunehmen. Die Schneiden 16, 19 werden durch Schneidkanten 22, 23 in Draufsicht jeweils in einen ersten Teilkörper I und einen zweiten Teilkörper II unterteilt, wobei die ersten Teilkörper I unter Spanflächen 24 bzw. 25 und die zweiten Teilkörper II unter Freiflächen 26 bzw. 27 liegen. Die Betrachtungen erfolgen jeweils unter der Annahme, dass sich das Bohrwerkzeug 1 um die Längsachse L1 nach links in eine Drehrichtung w dreht, wenn gebohrt wird. Durch die Seitenflächen 14, 15 bzw. 17, 18 der Schneiden 16, 19 werden jeweils Ebenen E1 bis E4 definiert, welche sich in jeweils gegenüberliegenden Schneide 19 bzw. 16 in einem spitzen Winkel α schneiden, wobei eine Schnittlinie 28 die jeweils gegenüberliegende Schneide 19 bzw. 16 durchläuft. Weiterhin verlaufen die den Spanflächen 24, 25 zugeordneten Seitenflächen 14, 18 in Ebenen E1 und E4, welche parallel zueinander stehen. Ebenso verlaufen Seitenflächen 15, 17, welche den Freiflächen 26, 27 zugeordnet sind, in parallelen Ebenen E2, E3. Die Mantelflächen 20, 21, welche die Seitenflächen 14, 15 bzw. 17, 18 verbinden, weisen wenigstens einen Abschnitt mit einem bogenförmigen Verlauf auf, welcher einen Nennradius RN des Schneidkörpers 6 bzw. des Bohrwerkzeugs 1 entspricht. Im Vergleich zu einem herkömmlichen, in Draufsicht in Richtung einer Bohrerlängsachse im Wesentlichen rechteckförmigen Schneidkörper weist das erfindungsgemäße Bohrwerkzeug 1 an seinem Schneidkörper 6 mit zunehmender radialer Entfernung von der Längsachse L1 bzw. einer Schneidspitze 34 zu beiden Seiten der Schneidkanten 22, 23 eine Materialzunahme auf. Durch diese Materialzunahme wird zum einen eine großflächigere Einwirkung der auch als Schlagflächen arbeitenden Spanflächen 24, 25 auf das zu zerstörende Material erreicht und zum anderen werden die Schneidkanten 22, 23 insbesondere zu einem Umkreis U5 des Bohrkopfs 5 hin besser abgestützt.

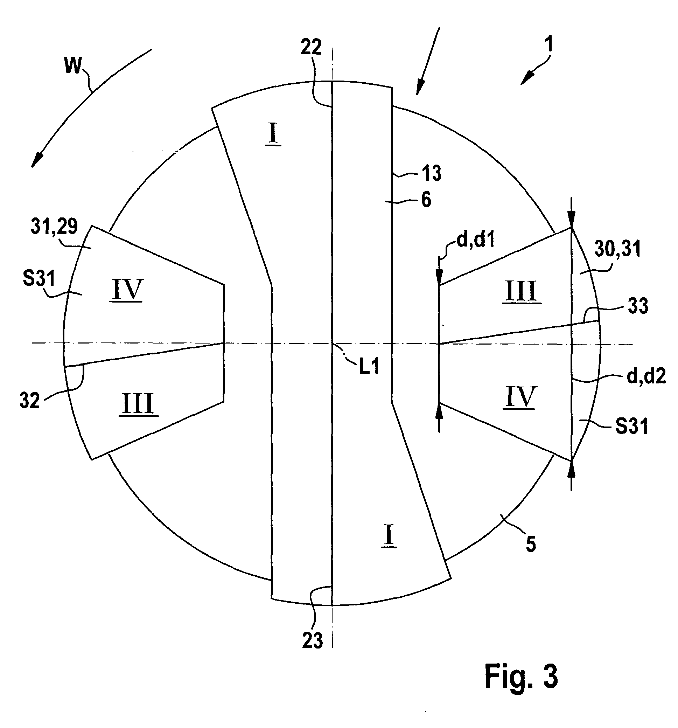

In der Fig. 3 ist eine nicht erfindungsgemäße zweite Ausführungsvariante eines Bohrwerkzeugs 1 gezeigt, dessen prinzipieller Aufbau dem in der Fig. 1a gezeigten Bohrwerkzeug entspricht, wobei das Bohrwerkzeug 1 in Draufsicht in Richtung einer Längsachse L1 dargestellt ist. Grundsätzlich kann bei dem in der Figur 3 dargestellten Bohrwerkzeug 1 zunächst auf die Beschreibung zur Fig. 2 verwiesen werden, wobei im Unterschied zu der in der Fig. 2 dargestellten Ausführungsvariante eine Kontur 13 des Schneidkörpers 6 und ein Verlauf von Schneidkanten 22, 23 so gewählt ist, dass bei zunehmender radialer Entfernung von der Längsachse L1 ausschließlich in einem in Drehrichtung w vor den Schneidkanten 22, 23 liegenden ersten Teilkörpern I eine Materialzunahme erfolgt. Ein derartig ausgestaltetes Bohrwerkzeug 1 ist insbesondere auf eine hohe Zertrümmerungsleistung optimiert. Weiterhin unterscheidet sich das in der Fig. 3 dargestellte Bohrwerkzeug 1 von dem in der Fig. 2 dargestellten Bohrwerkzeug durch einen zweiten Schneidkörper 29 und einen dritten Schneidkörper 30, welche als Nebenschneidkörper 31 ausgebildet sind, jeweils nur eine Schneide S31 aufweisen und in einem Bohrerkopf 5 beabstandet zu dem ersten Schneidkörper 6 angeordnet sind. Analog zu dem ersten Schneidkörper 6 weisen die Nebenschneidkörper 31 in Draufsicht in Richtung der Längsachse L1 quer zu ihrer radialen Erstreckung eine Dicke d auf, welche mit zunehmendem radialen Abstand von der Längsachse L1 von einer minimalen Dicke d1 auf eine maximale Dicke d2 zunimmt. Wie der erste Schneidkörper 6 werden auch die Nebenschneidkörper 31 von ihren Schneidkanten 32, 33 in erste und zweite Teilkörper III, IV geteilt, wobei bedingt durch den Verlauf der Schneidkante 32 bzw. 33 mit zunehmendem radialen Abstand von der Längsachse L1 vor und hinter den Schneidkanten 22 bzw. 33 eine Materialzunahme erfolgt.

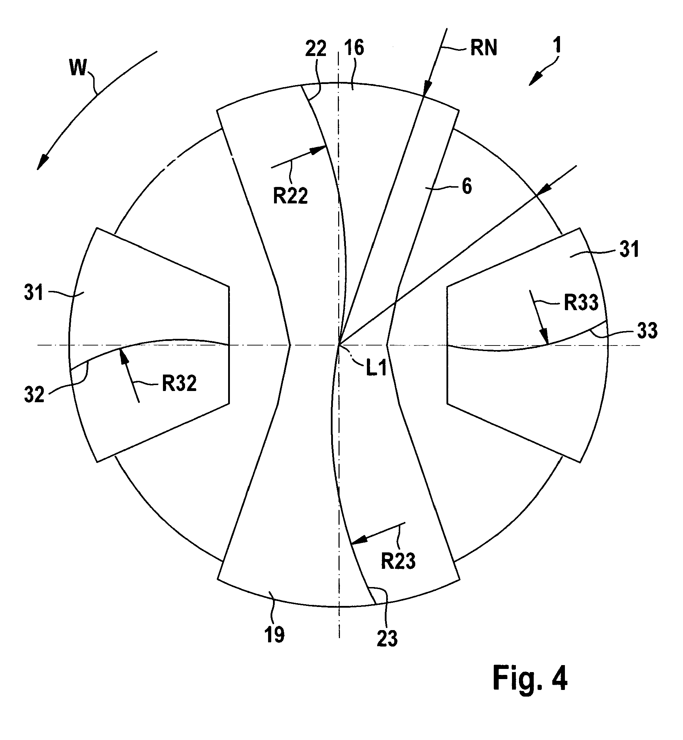

In der Fig. 4 ist eine nicht erfindungsgemäße dritte Ausführungsvariante eines Bohrwerkzeugs 1 dargestellt, welche bezüglich der Gestaltung eines ersten Schneidkörpers 6 der in der Fig. 2 dargestellten ersten Ausführungsvariante entspricht. Weiterhin weist die dritte Ausführungsvariante wie auch die in der Fig. 3 gezeigte zweite Ausführungsvariante Nebenschneiden 31 auf. Schneidkanten 22, 23 der Schneiden 16, 19 des ersten Schneidkörpers 6 sind, in Richtung einer Längsachse L1 des Bohrwerkzeugs 1 betrachtet, konkav gewölbt und springen gegenüber einer gedachten, radial verlaufenden Schneidkante entgegen der Drehrichtung zurück. Schneidkanten 32, 33 der Nebenschneiden 31 weisen ebenfalls, in Richtung der Längsachse L1 des Bohrwerkzeugs 1 betrachtet, eine derartige Krümmung auf. Alle vier sichelähnlichen Schneidkanten 22, 23, 32, 33 weisen Radien R22, R23, R32, R33 auf, welche größer sind als ein Nennradius RN des Schneidkörpers 6.

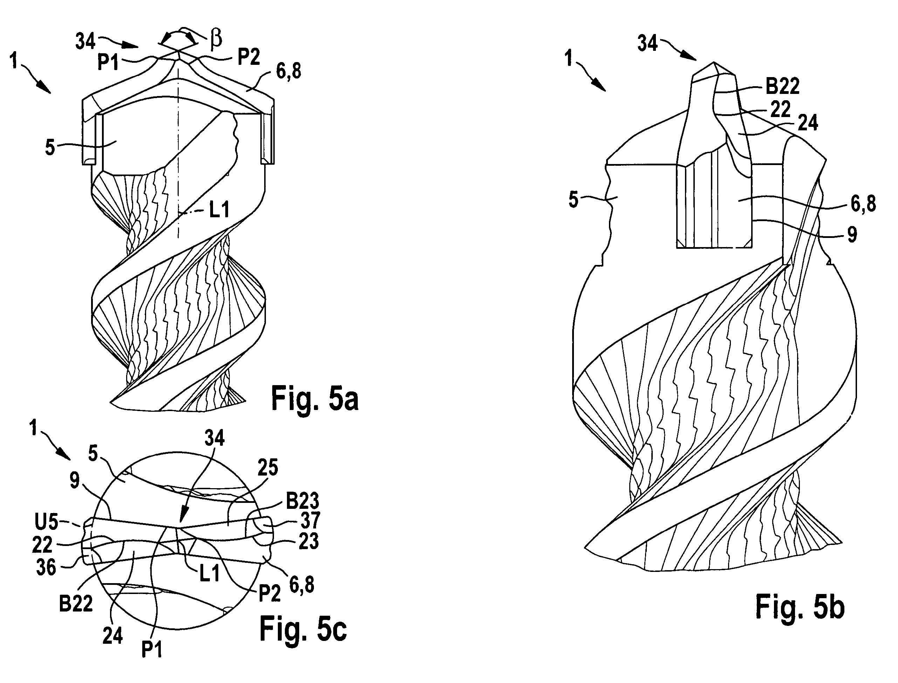

In den Figuren 5a bis 5c ist eine erfindungsgemäße vierte Ausführungsvariante eines Bohrwerkzeugs 1 in zwei perspektivischen Teilansichten und in einer Draufsicht in Richtung einer Längsachse L1 der Bohrwerkzeugs 1 dargestellt. Ein Schneidkörper 6 ist als Schneidplatte 8 ausgebildet, welche in einem Schlitz 9 eines Bohrkopfs 5 gehalten ist. Der Schneidkörper 6 weist eine Spitze 34 auf. Der Schneidkörper 6 mit der als Zentrierspitze ausgeführten Schneidspitze 34 weist keine Querschneide auf und erlaubt hierdurch ein besseres Zentrieren beim Anbohren. Ein bogenförmiger Abschnitt B22 bzw. B23 einer Schneidkanten 22 bzw. 23 beginnt in einer der Seitenansichten, wie diese die Figuren 5a und 5b zeigen, betrachtet unterhalb der Schneidspitze 34 insbesondere in Punkten P1, P2, in welchen sich ein Spitzenwinkel β sprunghaft ändert. Die bogenförmigen Abschnitte B22, B23 enden etwa an einem durch den Bohrerkopf 5 definierten Umkreis U5. Hierdurch wird der Schneidkörper 6 insbesondere in Eckbereichen 36, 37 seiner Spanflächen 24, 25 besonders stabil und massiv gehalten.

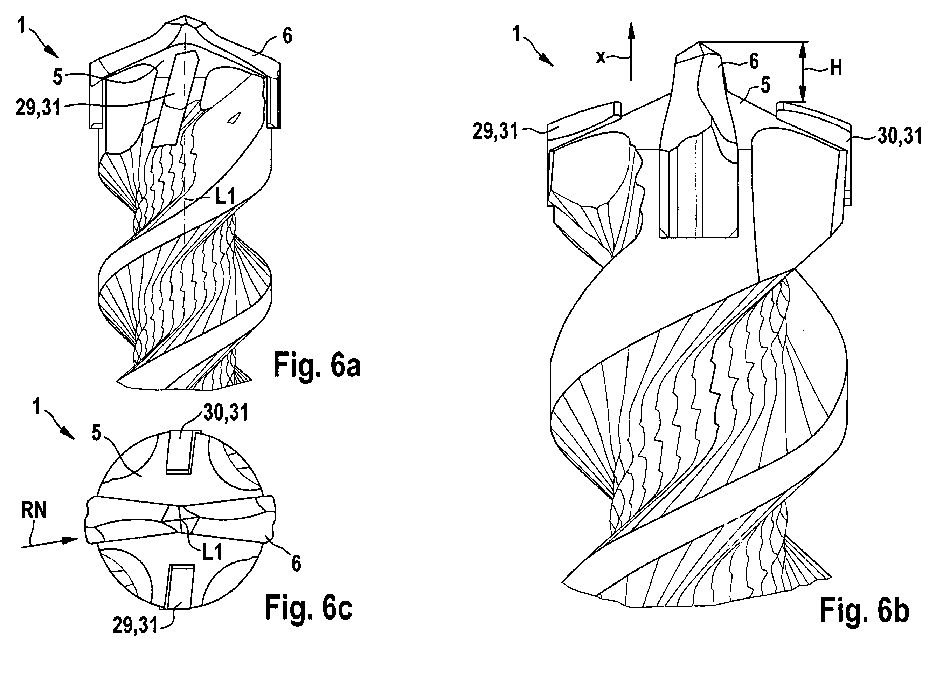

In den Fig. 6a bis 6c ist in Analogie zu den Fig.5a bis 5c eine erfindungsgemäße fünfte Ausführungsvariante eines Bohrwerkzeugs 1 dargestellt. Im Unterschied zu der vierten Ausführungsvariante weist die fünfte Ausführungsvariante einen zweiten und einen dritten Schneidkörper 29, 30 auf, welche als Nebenschneidkörper 31 ausgebildet sind. Die Nebenschneidkörper 31 sind gegenüberliegend und jeweils um etwa 90° Grad zu einem ersten Schneidkörper 6 angeordnet. Genauso wie der erste Schneidkörper 6 stehen auch der zweite und dritte Schneidkörper 29, 30 in axialer Richtung entlang einer Längsachse L1 des Bohrwerkzeugs 1 über einen Bohrkopf 5 hervor, wobei der erste Schneidkörper 6 den zweiten und dritten Schneidkörper 29, 30 in eine Pfeilrichtung x mit einer Spitze 34 um eine Höhe H überragt, welche wenigstens ein Drittel eines Nennradius RN des ersten Schneidkörpers 6 beträgt.

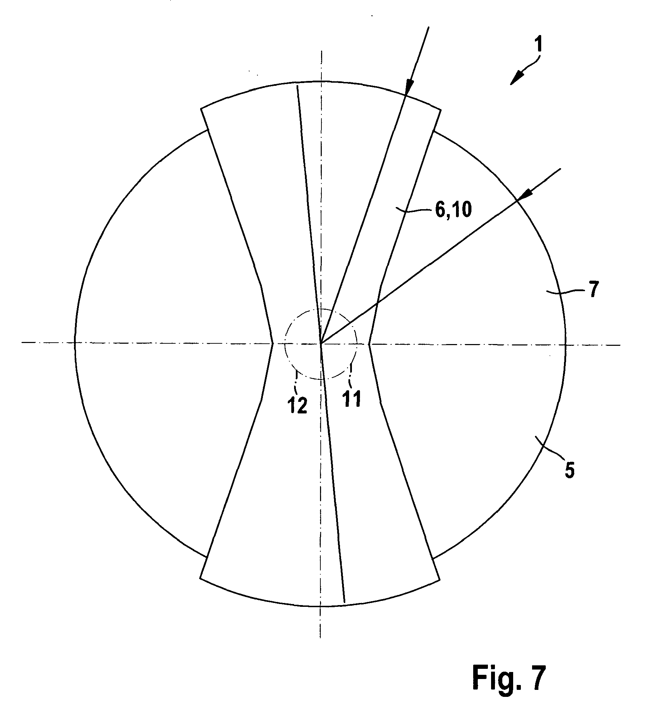

In der Fig. 7 ist eine nicht erfindungsgemäße sechste Ausführungsvariante eines Bohrwerkzeugs 1 dargestellt, dessen prinzipieller Aufbau dem in der Fig. 1 b gezeigten Bohrwerkzeug entspricht. Bei dieser Ausführungsvariante ist eine Schneidkörper 6 als Vollhartmetallkopf 10 ausgeführt, welcher weitestgehend plan auf einem freien Ende 7 eines Bohrkopfes 5 des Bohrwerkzeugs 1 aufliegt und zusätzlich mit einem Stift 11 in eine Vertiefung 12 in dem Bohrkopf 5 eingebettet ist.

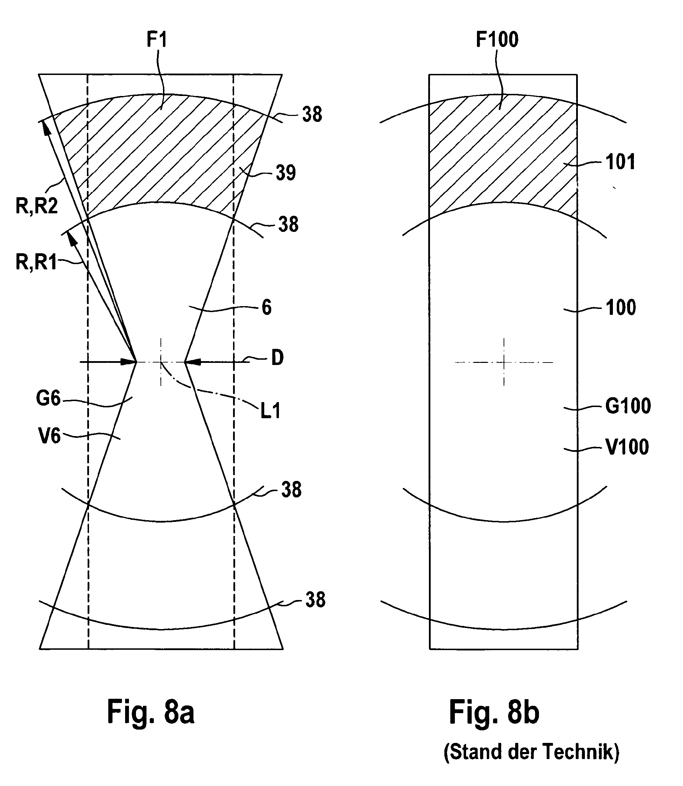

In den Figuren 8a und 8b sind sich jeweils in Draufsicht ein nicht erfindungsgemäßer Schneidkörper 6 und ein aus dem Stand der Technik bekannter, in Draufsicht rechteckförmiger Schneidkörper 100 gegenübergestellt. In der Fig. 8a ist mit Kreisbögen 38 ein konzentrisch zu einer Längsachse L1 angeordneter Kreisring 39 angedeutet. Dieser Kreisring 39 ist als Kreisring 101 entsprechend in die Fig. 8b übernommen. Ein Vergleich der in den Fig. 8a und 8b dargestellten schraffierten Flächen F1 und F100 zeigt nun, wie eine Fläche bzw. ein Volumen des nicht erfindungsgemäßen Schneidkörpers 6 mit zunehmendem radialem Abstand R, R1 bzw. R2 von der Längsachse L1 gegenüber dem in der Fig. 8b gezeigten herkömmlichen Schneidkörper 100 zunimmt, obwohl die beiden Schneidkörper 1, 100 in der Draufsicht vergleichbare Gesamtflächen G6, G100 aufweisen. Sofern auch noch die giebelförmige Ausbildung der Schneidkörper 6 bzw. 100 in Betracht gezogen wird, ergibt sich bei in Draufsicht gleich großen Gesamtflächen G6, G100 ein geringeres Volumen V6 des nicht erfindungsgemäßen Schneidkörpers 6 gegenüber einem Volumen V100 des Schneidkörpers 100, da der Schneidkörper 6 dort dicker ist, wo er in Richtung der Längsachse L1 betrachtet niedrig ist und da der Schneidkörper 6 dort schmäler ist, wo er in Richtung der Längsachse L1 betrachtet hoch ist.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

## Patentansprüche

1. Bohrwerkzeug (1) insbesondere für Bohr- und/oder Meißelgeräte zum Bohren in Mauerwerk, Beton, Gestein und dgl. umfassend
- einen Bohrkopf (5) und
- wenigstens einen Schneidkörper (6),
- wobei der Schneidkörper (6) an einem freien Ende (7) des Bohrkopfes (5) angeordnet ist,
- wobei der Schneidkörper (6) mit einer Schneidspitze (34) den Bohrkopf (5) bohrrichtungsseitig axial in Richtung einer Längsachse (L1) des Bohrwerkzeugs (1) überragt und
- wobei der Schneidkörper (6) radial über den Bohrkopf (5) hervorsteht,
- wobei der Schneidkörper (6) wenigstens zwei Schneiden (16, 19) mit Schneidkanten (22, 23) umfasst,
- wobei sich die Schneiden (16, 19) von der Scheidspitze (34) radial nach außen erstrecken,
- und wobei die Schneidkanten (22, 23) des Schneidkörpers (6), in Richtung der Längsachse (L1) des Bohrwerkzeugs (1) betrachtet, zwischen der Schneidspitze (34) und die Seitenflächen (14, 15, 17, 18) verbindenden Mantelflächen (20, 21) wenigstens einen Abschnitt (822, B23) mit einem bogenförmigen, eine radial nach außen gerichtete Bewegung von Bohrklein bremsenden Verlauf aufweisen, **dadurch gekennzeichnet, dass** der bogenförmige Abschnitt (B22, B23) der Schneidkante (22, 23), dort beginnt, wo sich der Spitzenwinkel (β) der Spitze (34) des Schneidkörpers (6) sprunghaft verändert und insbesondere sprunghaft verkleinert.

2. Bohrwerkzeug nach Anspruch 1, **dadurch gekennzeichnet, dass** der bogenförmige Abschnitt (B22, B23) der Schneidkante (22, 23), in Richtung der Längsachse (L1) des Bohrwerkzeugs (1) betrachtet, konkav gewölbt ist und entgegen der Drehrichtung (w) des Bohrwerkzeugs (1) zurückspringt.

3. Bohrwerkzeug nach Anspruch 1 oder 2, **dadurch gekennzeichnet, dass** der bogenförmige Abschnitt (B22, B23) der Schneidkante (22, 23) sich über wenigstens 50% eines Nennradius (RN) des Schneidkörpers (6) erstreckt und insbesondere in oder an einer Spitze (34) des Schneidkörpers (6) beginnt.

4. Bohrwerkzeug nach Ansprüche 1 bis 3, **dadurch gekennzeichnet, dass** der bogenförmige Abschnitt (B22, B23) der Schneidkante (22, 23), dort endet, wo die Schneidkante (22, 23) in die Mantelfläche (20, 21) des Schneidkörpers (6) übergeht.

5. Bohrwerkzeug nach Ansprüche 1 bis 4, **dadurch gekennzeichnet, dass** der bogenförmige Abschnitt (B22, B23) der Schneidkante (22, 23), dort endet, wo die Schneidkante (22, 23), in Richtung der Längsachse (L1) des Bohrwerkzeugs (1) betrachtet, einen durch den Schaft (3) oder den Bohrerkopf (5) definierten Umkreis (U5) erreicht.

6. Bohrwerkzeug nach Anspruch einem der Ansprüche 1 bis 5, **dadurch gekennzeichnet, dass** der bogenförmige Abschnitt (B22, B23) einen Radius (R22, R23) oder mehrere aneinandergereihte Radien aufweist, welcher bzw. welche größer sind als ein Nennradius (RN) des Schneidkörpers (6).

7. Bohrwerkzeug nach einem der vorhergehenden Ansprüche, **dadurch gekennzeichnet, dass** jede Schneide (16, 19) des Schneidkörpers (6), in Richtung der Längsachse (L1) des Bohrwerkzeugs (1) betrachtet, quer zu ihrem radialen Verlauf eine Dicke (D) aufweist, welche mit zunehmendem radialen Abstand von der Längsachse (L1) von einer minimalen Dicke (D1) auf eine maximale Dicke (D2) zunimmt, wobei eine Materialzunahme in Drehrichtung (w) vor der Schneidkante (22, 23) oder beidseits der Schneidkante (22, 23) erfolgt.

8. Bohrwerkzeug nach einem der vorhergehenden Ansprüche, **dadurch**
**gekennzeichnet, dass** Seitenflächen (14, 15; 17, 18) der Schneiden (16, 19), mit welchen die jeweilige Schneide (16, 19) in den Bohrerkopf (5) eingebettet ist oder den Bohrerkopf (5) berührt, jeweils Ebenen (E1 - E4) definieren, welche in Richtung der Längsachse (L1) des Bohrwerkzeugs (1) betrachtet in einem spitzen Winkel (α) zueinander stehen und sich insbesondere in einer Schnittlinie (28) scheiden, welche den Scheidkörper (6) in der jeweils gegenüberliegenden Schneide (19, 16) durchläuft.

9. Bohrwerkzeug nach einem der vorhergehenden Ansprüche, **dadurch gekennzeichnet, dass** Seitenflächen (14, 15; 17, 18) der beiden Schneiden (16, 19) des Schneidkörpers (6), welche in Spanflächen (24, 25) übergehen, in parallelen Ebenen (E1, E4) liegen.

10. Bohrwerkzeug nach einem der vorhergehenden Ansprüche, **dadurch gekennzeichnet, dass** Seitenflächen (14, 15; 17, 18) der beiden Schneiden (16, 19) des Schneidkörpers (6), welche in Freiflächen (26, 27) übergehen, in parallelen Ebenen (E2, E3) liegen

11. Bohrwerkzeug nach einem der vorhergehenden Ansprüche, **dadurch gekennzeichnet, dass** der Schneidkörper (6) als Schneidplatte (8) ausgebildet ist, welche in einem in dem Bohrerkopf (5) ausgebildeten Schlitz (9) befestigbar ist.

12. Bohrwerkzeug nach einem der vorhergehenden Ansprüche, **dadurch gekennzeichnet, dass** der Schneidkörper (6) als Vollhartmetallkopf (10) ausgebildet ist, welcher auf dem Bohrerkopf (5) befestigbar ist.

13. Bohrwerkzeug nach einem der vorhergehenden Ansprüche, **dadurch gekennzeichnet, dass** das Bohrwerkzeug (1) einen zweiten Schneidkörper (29) und insbesondere einen zweiten und einen dritten Schneidkörper (29, 30) aufweist, wobei sich der zweite und der dritte Schneidkörper (29, 30) insbesondere gegenüberliegen und wobei der oder die Schneidkörper (29, 30) insbesondere als Nebenschneidkörper (31) ausgebildet sind, welche mit Abstand zu dem ersten Schneidkörper (6) angeordnet sind und welche jeweils nur eine Schneide (S31) aufweisen.

14. Bohrwerkzeug nach Anspruch 13, **dadurch gekennzeichnet, dass** die Schneide (S31) des Nebenschneidkörpers (31), in Richtung der Längsachse (L1) des Bohrwerkzeugs (1) betrachtet, quer zu ihrer radialen Erstreckung eine Dicke (d) aufweist, welche mit zunehmendem radialen Abstand von der Längsachse (L1) des Bohrwerkzeugs (1) von einer minimalen Dicke (d1) auf eine maximale Dicke (d2) zunimmt, wobei insbesondere eine Materialzunahme in Drehrichtung (w) vor einer Schneidkante (32, 33) oder beidseits der Schneidkante (32, 33) erfolgt.

## Claims

1. Drilling tool (1), in particular for drilling and/or chiselling devices for drilling into masonry, concrete, rock and the like, comprising
- a drill head (5) and
- at least one cutting body (6),
- wherein the cutting body (6) is arranged at a free end (7) of the drill head (5),
- wherein a cutting tip (34) of the cutting body (6) projects axially beyond the drill head (5) on the drilling direction side in the direction of a longitudinal axis (L1) of the drilling tool (1), and
- wherein the cutting body (6) protrudes radially from the drill head (5),
- wherein the cutting body (6) comprises at least two lips (16, 19) having cutting edges (22, 23),
- wherein the lips (16, 19) extend radially outwards from the cutting tip (34),
- and wherein the cutting edges (22, 23) of the cutting body (6), as seen in the direction of the longitudinal axis (L1) of the drilling tool (1), have, between the cutting tip (34) and the lateral surfaces (20, 21) connecting the side faces (14, 15; 17, 18), at least one portion (B22, B23) having an arcuate profile that brakes a radially outwardly directed movement of drillings, **characterized in that** the arcuate portion (B22, B23) of the cutting edge (22, 23) begins where the tip angle (β) of the tip (34) of the cutting body (6) abruptly changes, and in particular becomes abruptly smaller.

2. Drilling tool according to Claim 1, **characterized in that** the arcuate portion (B22, B23) of the cutting edge (22, 23), as seen in the direction of the longitudinal axis (L1) of the drilling tool (1), is concavely curved and is set back counter to the direction of rotation (w) of the drilling tool (1).

3. Drilling tool according to Claim 1 or 2, **characterized in that** the arcuate portion (B22, B23) of the cutting edge (22, 23) extends over at least 50% of a nominal radius (RN) of the cutting body (6) and begins in particular in or at a tip (34) of the cutting body (6).

4. Drilling tool according to Claims 1 to 3, **characterized in that** the arcuate portion (B22, B23) of the cutting edge (22, 23) ends where the cutting edge (22, 23) merges into the lateral surface (20, 21) of the cutting body (6).

5. Drilling tool according to Claims 1 to 4, **characterized in that** the arcuate portion (B22, B23) of the cutting edge (22, 23) ends where the cutting edge (22, 23), as seen in the direction of the longitudinal axis (L1) of the drilling tool (1), reaches a circumcircle (U5) defined by the shank (3) or the drill head (5).

6. Drilling tool according to one of Claims 1 to 5, **characterized in that** the arcuate portion (B22, B23) has a radius (R22, R23) or a plurality of successive radii, which is or are greater than a nominal radius (RN) of the cutting body (6).

7. Drilling tool according to one of the preceding claims, **characterized in that** each lip (16, 19) of the cutting body (6), as seen in the direction of the longitudinal axis (L1) of the drilling tool (1), has a thickness (D), transversely to its radial course, which increases from a minimum thickness (D1) to a maximum thickness (D2) with increasing radial distance from the longitudinal axis (L1), wherein an increase in material occurs in the direction of rotation (w) in front of the cutting edge (22, 23) or on both sides of the cutting edge (22, 23).

8. Drilling tool according to one of the preceding claims, **characterized in that** side faces (14, 15; 17, 18) of the lips (16, 19), by way of which the respective lip (16, 19) is embedded in the drill head (5) or comes into contact with the drill head (5), each define planes (E1-E4) which, as seen in the direction of the longitudinal axis (L1) of the drilling tool (1), are at an acute angle (α) to one another and intersect in particular at an intersection line (28) which runs through the cutting body (6) in the respectively opposite lip (19, 16).

9. Drilling tool according to one of the preceding claims, **characterized in that** side faces (14, 15; 17, 18) of the two lips (16, 19) of the cutting body (6), which merge into rake faces (24, 25), lie in parallel planes (E1, E4).

10. Drilling tool according to one of the preceding claims, **characterized in that** side faces (14, 15; 17, 18) of the two lips (16, 19) of the cutting body (6), which merge into flanks (26, 27), lie in parallel planes (E2, E3).

11. Drilling tool according to one of the preceding claims, **characterized in that** the cutting body (6) is in the form of a cutting insert (8) which can be secured in a slot (9) formed in the drill head (5).

12. Drilling tool according to one of the preceding claims, **characterized in that** the cutting body (6) is in the form of a solid carbide head (10) which can be secured to the drill head (5).

13. Drilling tool according to one of the preceding claims, **characterized in that** the drilling tool (1) has a second cutting body (29) and in particular a second and a third cutting body (29, 30), wherein the second and the third cutting body (29, 30) are in particular opposite one another and wherein the cutting body or bodies (29, 30) are in particular in the form of secondary cutting bodies (31) which are arranged at a distance from the first cutting body (6) and which each have only one lip (S31).

14. Drilling tool according to Claim 13, **characterized in that** the lip (S31) of the secondary cutting body (31), as seen in the direction of the longitudinal axis (L1) of the drilling tool (1), has a thickness (d), transversely to its radial extent, which increases from a minimum thickness (d1) to a maximum thickness (d2) with increasing radial distance from the longitudinal axis (L1) of the drilling tool (1), wherein in particular an increase in material occurs in the direction of rotation (w) in front of one cutting edge (32, 33) or on both sides of the cutting edge (32, 33).

## Revendications

1. Foret (1), notamment pour appareils de forage et/ou de percussion, pour effectuer un perçage dans une maçonnerie, du béton, de la pierre et similaire, comprenant :
- une tête de forage (5) et
- au moins un corps de coupe (6),
- le corps de coupe (6) étant disposé à une extrémité libre (7) de la tête de forage (5),
- le corps de coupe (6) dépassant avec une pointe de coupe (34) au-delà de la tête de forage (5) du côté de la direction de forage axialement dans la direction d'un axe longitudinal (L1) du foret (1), et
- le corps de coupe (6) faisant saillie radialement au-delà de la tête de forage (5),
- le corps de coupe (6) comprenant au moins deux tranchants (16, 19) avec des arêtes de coupe (22, 23),
- les tranchants (16, 19) s'étendant radialement vers l'extérieur depuis la pointe de coupe (34),
- et les arêtes de coupe (22, 23) du corps de coupe (6), considérées dans la direction de l'axe longitudinal (L1) du foret (1), entre la pointe de coupe (34) et des faces d'enveloppe (20, 21) reliant les faces latérales (14, 15 ; 17, 18), présentant au moins une portion (B22, B23) avec une allure courbe, freinant un mouvement orienté radialement vers l'extérieur des débris de forage,
**caractérisé en ce que** la portion de forme courbe (B22, B23) de l'arête de coupe (22, 23) commence là où l'angle de pointe (β) de la pointe (34) du corps de coupe (6) varie brusquement et notamment diminue brusquement.

2. Foret selon la revendication 1, **caractérisé en ce que** la portion de forme courbe (B22, B23) de l'arête de coupe (22, 23), considérée dans la direction de l'axe longitudinal (L1) du foret (1), est cintrée sous forme concave et revient élastiquement à l'encontre du sens de rotation (w) du foret (1).

3. Foret selon la revendication 1 ou 2, **caractérisé en ce que** la portion de forme courbe (B22, B23) de l'arête de coupe (22, 23) s'étend sur au moins 50 % d'un rayon nominal (RN) du corps de coupe (6) et notamment commence dans ou au niveau d'une pointe (34) du corps de coupe (6).

4. Foret selon les revendications 1 à 3, **caractérisé en ce que** la portion de forme courbe (B22, B23) de l'arête de coupe (22, 23) s'arrête là où l'arête de coupe (22, 23) se prolonge par la face d'enveloppe (20, 21) du corps de coupe (6).

5. Foret selon les revendications 1 à 4, **caractérisé en ce que** la portion de forme courbe (B22, B23) de l'arête de coupe (22, 23) se termine là où l'arête de coupe (22, 23), considérée dans la direction de l'axe longitudinal (L1) du foret (1), atteint un périmètre (U5) défini par la tige (3) ou la tête de forage (5).

6. Foret selon l'une quelconque des revendications 1 à 5, **caractérisé en ce que** la portion de forme courbe (B22, B23) présente un rayon (R22, R23) ou plusieurs rayons alignés, qui est ou sont supérieurs à un rayon nominal (RN) du corps de coupe (6).

7. Foret selon l'une quelconque des revendications précédentes, **caractérisé en ce que** chaque tranchant (16, 19) du corps de coupe (6), considéré dans la direction de l'axe longitudinal (L1) du foret (1), présente, transversalement à son allure radiale, une épaisseur (D) qui augmente avec l'augmentation de la distance radiale de l'axe longitudinal (L1) d'une épaisseur minimale (D1) à une épaisseur maximale (D2), une augmentation de matière dans le sens de rotation (w) se produisant avant l'arête de coupe (22, 23) ou de chaque côté de l'arête de coupe (22, 23).

8. Foret selon l'une quelconque des revendications précédentes, **caractérisé en ce que** des faces latérales (14, 15 ; 17, 18) des tranchants (16, 19), avec lesquelles le tranchant respectif (16, 19) est encastré dans la tête de forage (5), ou avec lesquelles vient en contact la tête de forage (5), définissent à chaque fois des plans (E1-E4) qui, considérés dans la direction de l'axe longitudinal (L1) du foret (1), sont orientés suivant un angle de pointe (α) les uns par rapport aux autres et se coupent notamment au niveau d'une ligne de coupe (28) qui traverse le corps de coupe (6) dans le tranchant (19, 16) opposé respectif.

9. Foret selon l'une quelconque des revendications précédentes, **caractérisé en ce que** des faces latérales (14, 15 ; 17, 18) des deux tranchants (16, 19) du corps de coupe (6), qui se prolongent par des surfaces d'enlèvement de matière (24, 25), se situent dans des plans parallèles (E1, E4).

10. Foret selon l'une quelconque des revendications précédentes, **caractérisé en ce que** des faces latérales (14, 15 ; 17, 18) des deux tranchants (16, 19) du corps de coupe (6), qui se prolongent par des surfaces libres (26, 27), se situent dans des plans parallèles (E2, E3).

11. Foret selon l'une quelconque des revendications précédentes, **caractérisé en ce que** le corps de coupe (6) est réalisé sous forme de plaquette de coupe (8) qui peut être fixée dans une fente (9) réalisée dans la tête de forage (5).

12. Foret selon l'une quelconque des revendications précédentes, **caractérisé en ce que** le corps de coupe (6) est réalisé sous forme de tête en métal dur massif (10) qui peut être fixée sur la tête de forage (5).

13. Foret selon l'une quelconque des revendications précédentes, **caractérisé en ce que** le foret (1) présente un deuxième corps de coupe (29) et notamment un deuxième et un troisième corps de coupe (29, 30), le deuxième et le troisième corps de coupe (29, 30) étant notamment opposés et le ou les corps de coupe (29, 30) étant réalisés notamment sous forme de corps de coupe auxiliaires (31), qui sont disposés à distance du premier corps de coupe (6) et qui présentent à chaque fois seulement un tranchant (S31).

14. Foret selon la revendication 13, **caractérisé en ce que** le tranchant (S31) du corps de coupe auxiliaire (31), considéré dans la direction de l'axe longitudinal (L1) du foret (1), présente, transversalement à son étendue radiale, une épaisseur (d) qui augmente avec l'augmentation de la distance radiale de l'axe longitudinal (L1) du foret (1) d'une épaisseur minimale (d1) à une épaisseur maximale (d2), une augmentation de matière dans le sens de rotation (w) se produisant notamment avant une arête de coupe (32, 33) ou de chaque côté de l'arête de coupe (32, 33).
